# EUROPEAN PATENT SPECIFICATION

(11) **EP 4 150 433 B1**
(45) Date of publication and mention of the grant of the patent: **21.10.2026**
(21) Application number: 21745452.9
(22) Date of filing: 13.05.2021
(51) Int. Cl.: G06F 1/16, G06F 1/18

(54) **A METHOD FOR CONFIGURING A COMPUTER MONITOR TO A MINICOMPUTER AND A MINICOMPUTER**
VERFAHREN ZUR KONFIGURATION EINES COMPUTERMONITORS AN EINEN MINICOMPUTER UND MINICOMPUTER
PROCÉDÉ DE CONFIGURATION D'UN MONITEUR D'ORDINATEUR POUR UN MINI-ORDINATEUR, ET MINI-ORDINATEUR

(30) Priority: 13.05.2020 IE S20200101
(43) Date of publication of application: 22.03.2023
(73) Proprietor: Leinster Computer Networks Limited, Newbridge, County Kildare (IE)
(72) Inventor: HUDZIAK, Anthony Patrick, County Kildare (IE)
(74) Representative: Gorman, Francis Fergus
(86) International application number: PCT/IE2021/000009
(87) International publication number: WO 2021/229560

(56) References cited:
- WO-A1-2007/135756
- FR-A1- 2 875 312
- US-A1- 2004 095 339
- US-A1- 2010 328 873
- US-A1- 2014 140 000
- US-A1- 2016 014 390

## Description

The present invention relates to a method for configuring a computer monitor to a minicomputer, and the invention also relates to a minicomputer.

With the ever-increasing move towards home working, which has been accelerated by the coronavirus pandemic, a need exists for a relatively low cost computer to enable employees working from home to remotely access the computer system of their respective employers. The computer system of an employer may be any type of computer, for example, a desktop computer, a main frame computer or a computer system based on cloud computing, or other such remote computer.

At present an employee working from home requires a desktop computer or a laptop computer in order to access his or her employer's computer system. Both desktop computers and laptop computers are relatively expensive and in a company which employs a large number of staff, the expense of providing each employee with a desktop computer or a laptop computer can be quite prohibitive. Accordingly, there is a need for a low cost computer which addresses this problem and which would permit an employee working from home to access the computer system of his or her employer.

Similar problems exist within companies, since to access the computer system of a company, each employee working on the premises of the company must be provided with a means for communicating with the computer system of the company. Typically, each employee is provided with a desktop computer which is then configured to communicate with the main computer system of the company, either by hardwiring or by wireless means, for example, Wi-Fi. The cost of providing each employee within a company with a desktop computer, constitutes a significant expense of the company. Additionally, the running costs of such desktop computers is quite high, both the cost of providing power to each desktop computer, and the servicing costs of running a desktop computer. Accordingly, there is also a need to provide a relatively low cost computer which addresses this problem.

French Patent Specification No. 2,875,312 A1 of Jacques discloses a computer system managing a display device, comprising a mother board with processor for managing multimedia functions of the display device, a hard disc, a first electric power supply member for powering the mother board and the hard disc, an electronic component for transforming data of the mother board into at least one video signal addressed to a video interface component of the display, and a flattened removable lid for covering the system architecture. Said system further comprises a software module automatically controlling the display, a base support attached to the back of the display and having a matching or substantially flattened shape to be arranged substantially parallel to the plane of the display, fixing means being provided on said support to fix the whole set of components of the system.

The present invention is directed towards providing a relatively low cost computer, and a method for configuring a computer monitor as a minicomputer which address the problems set out above.

A method, according to the invention, for configuring a computer monitor as a minicomputer is defined in claim 1.

Preferably, the port access opening in the housing is provided along a lower end of the housing.

In one embodiment of the invention the microcomputer board is configured to communicate with a remote computer over a telecommunications network.

In another embodiment of the invention, the microcomputer board is configured to communicate with the remote computer in any one or more of LAN or Wi-Fi.

In another embodiment of the invention the microcomputer board is Wi-Fi enabled.

Preferably, the microcomputer board is configured to communicate with the remote computer in any one or more of the following protocols: Digital Signage, VPN, OpenVPN, HDX (Citrix JPG H.264), Horizon (VMWare BLAST PCoIP ), Media Player, NX (NoMachine), Performance Monitor, RDP (Microsoft RDP RemoteFX), SPICE, SSH, TN3270 (IBM), Telnet, User Defined(Bespoke), VNC, Web, X11 and IOT (Internet of Things).

Preferably, the microcomputer board is configured to communicate wirelessly with both the mouse and the keyboard.

In another embodiment of the invention the microcomputer board is configured to communicate with the at least one of the mouse and the keyboard in a Bluetooth protocol.

In one embodiment of the invention the remote computer with which the microcomputer board is configured to communicate comprises one or more of a remote main frame computer, a remote computer server, a remote desktop computer, a cloud computer and any other remote computing means.

In another embodiment of the invention the microcomputer board is configured to communicate with any one or more of the following screen sharing applications such as AnyDesk, Logmein, Splashtop, RDP, RDPfx, XfreeRDP, VNC, Chrome Remote Desktop, Join.me, Alpemix, Brosix, Jitsi, TeamViewer, Discord, Google Hangouts, Thinfinity Remote Desktop, ThinLinx and others, as well as any one or more cross platforms, namely, Windows, Linux, Chrome OS and IOS.

Preferably, the microcomputer board is configured so that when the Micro SD Card is located in the Micro SD Card receiver, the Micro SD Card acts as a hard drive for the microcomputer board. Advantageously, the communications mode of the microcomputer board is configured by the Micro SD Card located in the Micro SD Card receiver.

In a further embodiment of the invention an Micro SD Card access opening is formed in the housing for accommodating an Micro SD Card therethrough for insertion in the Micro SD Card receiver of the microcomputer board.

Preferably, a closure element is provided for selectively closing the Micro SD Card access opening, and advantageously, the closure element is operable between a closed state closing the Micro SD Card access opening, and an open state providing access through the Micro SD Card access opening.

In another embodiment of the invention the closure element is pivotally coupled on the housing, and is pivotal between the open state providing access through the Micro SD Card access opening and the closed state closing the Micro SD Card access opening.

In another embodiment of the invention the Micro SD Card access opening is located on the rear of the housing.

In one embodiment of the invention the microcomputer board is configured to communicate wirelessly with both the mouse and the keyboard.

Preferably, the microcomputer board is configured to communicate with the at least one of the mouse and the keyboard in a Bluetooth protocol.

In another embodiment of the invention a microcomputer board power supply is located on the component tray for providing a power supply to the microcomputer board from the mains AC electricity supply source.

In another embodiment of the invention the microcomputer board comprises a microcomputer board sold under any of the following trade names: Raspberry Pi, NanoPC-T4, Banana Pi R64, LattePanda Alpha 864, ODROID-XU4, Udoo x86 II, Ultra, ODROID-C1+, VoCore2, ASUS Tinker Board S, NVIDIA Jetson Nano Developer Kit, Onion Omega2+, ClockworkPi, Arduino Mega 2560, Rock64 Media Board, PocketBeagle, Le Potato, Banana Pi M64, Orange Pi Zero, VIM2 SBC by Khadas, NanoPi NEO2, Helios64 by Kobol and ODROID-HC2.

In one embodiment of the invention the microcomputer board comprises a microcomputer board sold under the trade name Raspberry Pi.

A minicomputer converted from a computer monitor according to the invention is defined in claim 12.

Preferably, the port access opening in the housing is provided along a lower end of the housing.

In one embodiment of the invention the microcomputer board is configured to communicate with the remote computer over a telecommunications network, and preferably, the microcomputer board is configured to communicate with the remote computer in a Wi-Fi protocol.

In one embodiment of the invention the remote computer with which the microcomputer board is configured to communicate comprises one or more of a remote main frame computer, a remote computer server, a remote desktop computer, a cloud computer and any other remote computing means.

In another embodiment of the invention the microcomputer board is configured to communicate with the remote computer in any one or more of LAN or Wi-Fi.

Preferably, the microcomputer board is Wi-Fi enabled.

In another embodiment of the invention the microcomputer board is configured to communicate with the remote computer in any one or more of the following protocols: Digital Signage, VPN, OpenVPN, HDX (Citrix JPG H.264), Horizon (VMWare BLAST PCoIP ), Media Player, NX (NoMachine), Performance Monitor, RDP (Microsoft RDP RemoteFX), SPICE, SSH, TN3270 (IBM), Telnet, User Defined(Bespoke), VNC, Web, X11 and IOT (Internet of Things).

Preferably, the microcomputer board is configured to communicate with any one or more of the following common screen sharing applications, namely, AnyDesk, Logmein, Splashtop, RDP, RDPfx, XfreeRDP, VNC, Chrome Remote Desktop, Join.me, Alpemix, Brosix, Jitsi, TeamViewer, Discord, Google Hangouts, Thinfinity Remote Desktop and ThinLinx.

Advantageously, the microcomputer board is configured to communicate with any one or more of cross platforms, namely, Windows, Linux, Chrome OS and IOS.

Preferably, the microcomputer board is configured to communicate wirelessly with both the mouse and the keyboard.

In another embodiment of the invention the microcomputer board is configured to communicate with the at least one of the mouse and the keyboard in a Bluetooth protocol.

Preferably, the microcomputer board is configured so that when the Micro SD Card is located in the Micro SD Card receiver, the Micro SD Card acts as a hard drive for the microcomputer board.

Advantageously, the communications mode of the microcomputer board is configured by the Micro SD Card located in the Micro SD Card receiver.

In a further embodiment of the invention an Micro SD Card access opening is formed in the housing for accommodating an Micro SD Card therethrough for insertion in the microcomputer board.

Preferably, a closure element is provided for selectively closing the Micro SD Card access opening, and preferably, the closure element is operable between a closed state closing the Micro SD Card access opening, and an open state providing access through the Micro SD Card access opening.

In another embodiment of the invention the closure element is pivotally coupled on the housing, and is pivotal between the open state providing access through the Micro SD Card access opening and the closed state closing the Micro SD Card access opening.

In another embodiment of the invention the Micro SD Card access opening is located on the rear of the housing.

In another embodiment of the invention a microcomputer board power supply is located on the component tray for providing a power supply to the microcomputer board from the mains AC electricity supply source.

In one embodiment of the invention the microcomputer board comprises a microcomputer board sold under any of the following trade names: Raspberry Pi, NanoPC-T4, Banana Pi R64, LattePanda Alpha 864, ODROID-XU4, Udoo x86 II, Ultra, ODROID-C1+, VoCore2, ASUS Tinker Board S, NVIDIA Jetson Nano Developer Kit, Onion Omega2+, ClockworkPi, Arduino Mega 2560, Rock64 Media Board, PocketBeagle, Le Potato, Banana Pi M64, Orange Pi Zero, VIM2 SBC by Khadas, NanoPi NEO2, Helios64 by Kobol and ODROID-HC2.

In one embodiment of the invention the microcomputer board comprises a Raspberry Pi microcomputer board.

The advantage of the invention are many. A particularly important advantage of the invention is that it provides a minicomputer at a relatively low cost which has the capability to communicate with a remote computer, which may be a desktop computer, a main frame computer, a computer server, a computer system based on cloud computing or any other remote computer. Accordingly, the minicomputer according to the invention is particularly suitable for employees working from home, in that through the minicomputer, they can communicate directly with the main computer system of an employer and communicate seamlessly through the main computer system of the employer with other minicomputers or other computers communicating with the same main remote computer system. Further, the minicomputer according to the invention enables an employee to communicate seamlessly through the employer's main computer system with other computers unconnected with the employer's main computer system, such as third party computers. Another particularly important advantage of the invention is that the minicomputer according to the invention apart from a mains AC electricity supply cable, no other cables are required to connect the minicomputer to a keyboard or a mouse, since communications between the minicomputer and the keyboard and the minicomputer and the mouse is carried out wirelessly. Additionally, the minicomputer is configured through the microcomputer board to communicate wirelessly with the main computer system of the employer, provided that the minicomputer is in a broadband Wi-Fi area.

By virtue of the fact that the minicomputer according to the invention is enabled to communicate with a remote computer, processing of data is carried out in the remote computer, and accordingly, minimal processing power is required of the microcomputer board. Thus, the microcomputer board used to configure an existing computer monitor to the minicomputer according to the invention is relatively inexpensive, and the expense of configuring the existing computer monitor is minimal. Thus, an employee working from home can be provided with a minicomputer which enables the employee to communicate with the main computer system of an employer at a relatively low cost.

By configuring a computer monitor as a minicomputer according to the invention using a microcomputer board sold under the trade name Raspberry Pi, a particularly efficient minicomputer is provided, which requires minimal power and may be configured to operate on an open source software operating system, for example, Linux, thus permitting further savings in the provision of the minicomputer according to the invention. Typically, the total power usage of the minicomputer when comprising a microcomputer board sold under the trade name Raspberry Pi is less than 50 watts.

A further advantage of the minicomputer according to the invention is that it can be enabled by an appropriate Micro SD Card to communicate with virtually any type of remote computing system, for example, a main frame computer, a computer server, a cloud computer, a desktop computer, a laptop computer or indeed any other remote computing means, and furthermore, the minicomputer according to the invention as well as being wirelessly communicable with a remote computing means, may also, if desired be hardwired to a remote or an adjacent computing means.

An additional advantage of the invention is that there is little limitation on the size of the screen of the minicomputer, for example, an existing computer monitor with screen sizes such as 22 inch, 24 inch and even 27 inch size, may be configured using the method according to the invention. Additionally, the minicomputer may be used as a second screen to another minicomputer communicating with the remote computer, or as a second screen to a desktop computer or indeed a laptop computer.

The invention will be more clearly understood from the following description of a preferred embodiment thereof, which is given solely by way of a non-limiting example, with reference to the accompanying drawings, in which:
Fig. 1 is a front view of a minicomputer according to the invention,
Fig. 2 is a view similar to Fig. 1 of the minicomputer of Fig. 1 with a portion of the minicomputer removed, and with components of the minicomputer illustrated partly in block representation,
Fig. 3 is a cross-sectional top plan view of a portion of the minicomputer of Fig. 1, and
Fig. 4 is a rear end elevational view of a detail of the minicomputer of Fig. 1.

Referring to the drawings there is illustrated a minicomputer according to the invention and indicated generally by the reference numeral 1. The minicomputer 1 comprises a computer monitor 2 which has been configured from a computer monitor 3 by a method also according to the invention. A keyboard 4 and a mouse 5 are provided, and both the keyboard 4 and the mouse 5 are configured to communicate wirelessly with the minicomputer 1 through respective USB Wi-Fi transmitters (not shown), as will be well known and understood by those skilled in the art.

The original computer monitor 3 is of the type which comprises a flat visual display screen 6, typically, a liquid crystal display screen, which is supported in a screen support housing 7. A rear housing 8 is secured to the rear of the screen support housing 7 and defines with the screen support housing 7 a hollow interior region 9, within which a component tray 10 is located, as will be described below. The rear housing 8 comprises a rear wall 12 and a pair of spaced apart narrow side walls 14 extending forwardly and outwardly from the rear wall 12 and joined by a narrow top wall 15 and a narrow bottom wall 16 both of which also extend forwardly from the rear wall 12. The rear wall 12, side walls 14, top and bottom walls 15 and 16 together with the screen support housing 7 define the hollow interior region 9. The side walls 14 and the top and bottom walls 15 and 16 define an open mouth 11 to the hollow interior region 9 which is closed by the screen support housing 7. The component tray 10 located in the hollow interior region 9 is secured to the screen support housing 7.

A screen controller 18 and a screen power supply unit 19 are located on a base panel 20 of the component tray 10. The screen power supply unit 19 provides suitable power supplies to the screen controller 18 and to the visual display screen 6 for powering thereof. The screen power supply unit 19 is configured to receive a mains AC electricity supply from a mains AC electricity source (not shown) through a mains electricity port 21.

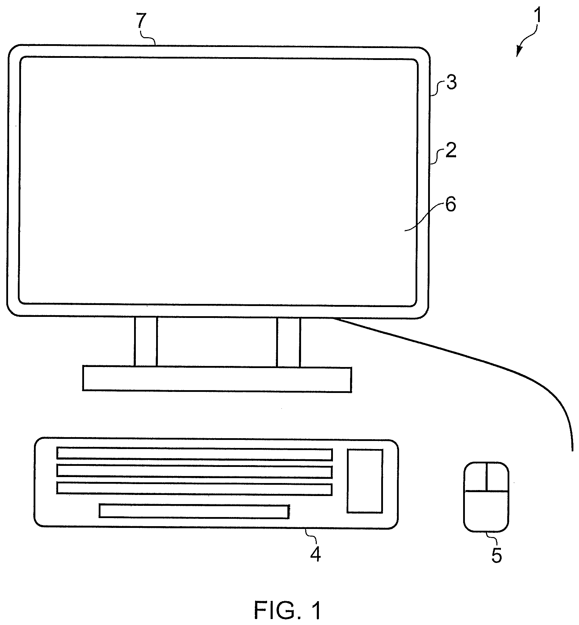

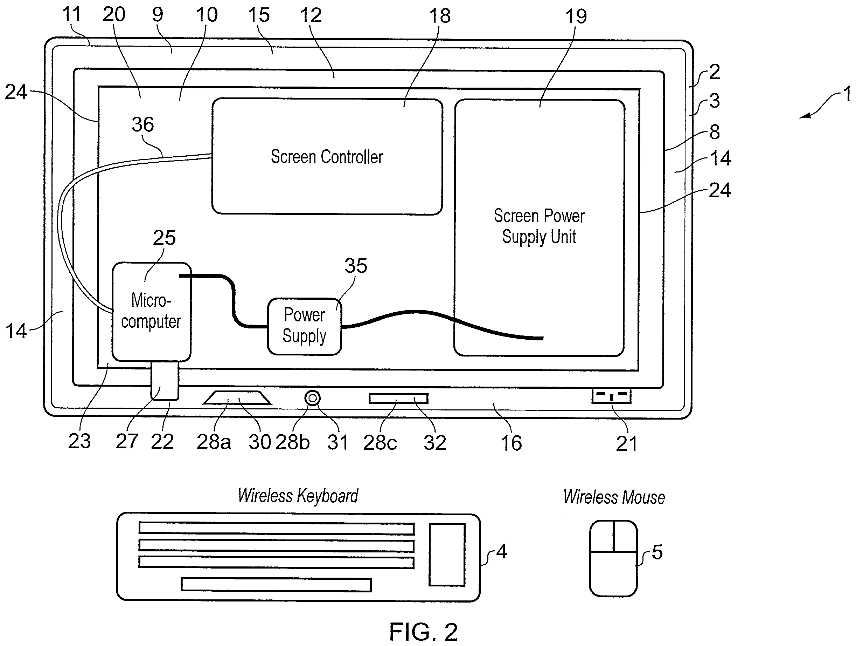

Originally, the screen controller 18 was located on the base panel 20 of the component tray 10 of the computer monitor 3 in the lower left-hand corner of the computer tray 10 when the computer monitor 3 is viewed from the front as illustrated in Figs. 1 and 2, so that ports (not shown) of the screen controller 18 were aligned with a port access opening 22 formed in the bottom wall 16 of the rear housing 9.

In the method according to the invention for configuring the computer monitor 3 to the computer monitor 2, initially the screen controller 18 is moved from a position adjacent the lower left-hand corner 23 of the base panel 20 of the component tray 10 to the position illustrated in Fig. 2, where the screen controller 18 is located adjacent the top end of the base panel 20 of the component tray 10 and is substantially centrally located on the component tray 10 between opposite sides 24 of the component tray 10. A microcomputer board, which in this embodiment of the invention comprises a microcomputer device 25 and which is sold under the trade name Raspberry Pi, is located on the base panel 20 of the component tray 10 adjacent a bottom left-hand corner 23 of the component tray 10. The microcomputer device 25 is supplied under the trade name Raspberry Pi by Raspberry Pi (Trading) Limited of Maurice Wilkes Building, St. John's Innovation Park, Cowley Road, Cambridge, England. The microcomputer device 25 is located on the component tray 10, so that ports 27 of the microcomputer device 25 are aligned with and accessible through the port access openings 22 in the bottom wall 16 of the rear housing 8.

The ports 27 of the microcomputer device 25 which are accessible through the port access opening 22 are a local area network (LAN) port 27a, two USB3 ports 27b and two USB2 ports 27c. Additional port access openings 28a, 28b and 28c are also formed in the bottom wall 16 of the rear housing 8 for accommodating a HDMI auxiliary (second screen) connection port 30, an audio auxiliary connection port 31 and a spare auxiliary connection port 32, respectively. The connection ports 30, 31 and 32 are hardwired to the microcomputer device 25.

A microcomputer device power supply 35 is located on the base panel 20 of the component tray 10 for providing a power supply to the microcomputer device 25. The microcomputer device power supply 35 is powered from the mains AC electricity supply which is applied to the screen power supply unit 19 through the mains electricity port 21.

A HDMI cable 36 communicates the microcomputer device 25 with the screen controller 18 for operating the screen controller 18 for controlling the display on the visual display screen 6.

The microcomputer device 25 is configured to communicate wirelessly with the keyboard 4 and mouse 5 through the respective USB Wi-Fi transmitters (not shown) of the keyboard 4 and the mouse 5.

The microcomputer device 25 is configurable to communicate wirelessly with a remote computer (not shown), which may be a remote main frame computer, a cloud computer, a remote virtual computer, a remote computer server, a remote desktop computer, or any other remote computing means. Depending on the remote computing means with which the microcomputer device 25 is configured to communicate, the microcomputer device 25 is configured to communicate via Wi-Fi and broadband over a telecommunications network, or directly over a telecommunications network, or by other suitable wireless communicating means. As will be described below the microcomputer device 25 is configurable to communicate in any suitable communications protocol, for example, Digital Signage, VPN, Open VPN, HDX (Citrix JPG H.264), Horizon (VMWare BLAST PCoIP ), Media Player, NX (NoMachine), Performance Monitor, RDP (Microsoft RDP, RemoteFX), SPICE, SSH, TN3270 (IBM), Telnet, User Defined(Bespoke), VNC, Web, X11 and IOT (Internet of Things).

The screen controller 18, the screen power supply unit 19, the microcomputer device 25 and the microcomputer power supply 35 are located on the base panel 20 of the component tray 10, so that when the component tray 10 is secured to the screen support housing 7, the screen controller 18, the screen power supply unit 19, the microcomputer device 25 and the microcomputer power supply 35 are located between the base panel 20 of the component tray 10 and the screen support housing 8, with the base panel 20 of the component tray 10 adjacent the rear wall 12 of the rear housing 8.

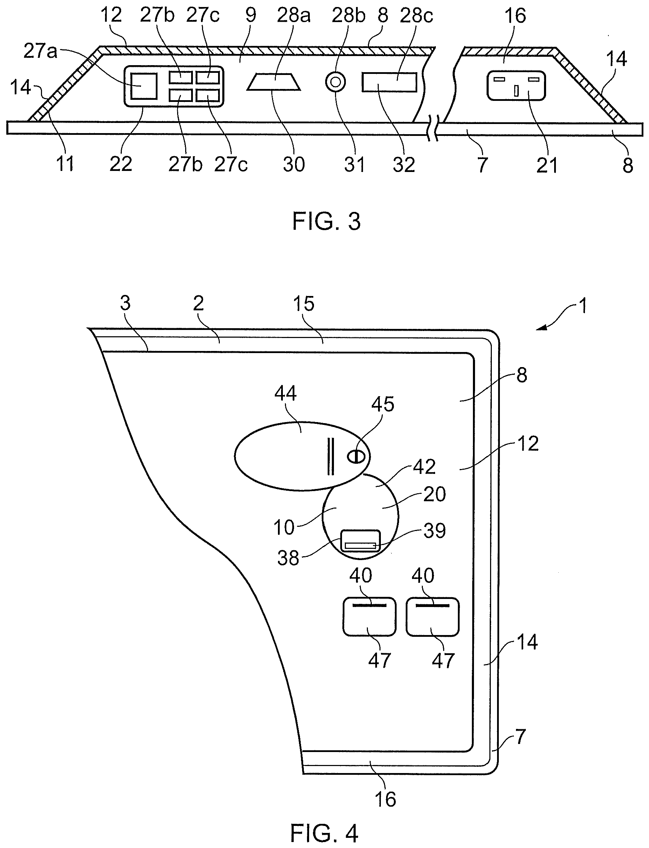

A card accommodating opening 38 is formed in the base panel 20 of the component tray 10 to provide access to a card receiving slot 39 in the rear of the microcomputer device 25 through the base panel 20. The card receiving slot 39 of the microcomputer device 25 is configured for receiving one of a plurality of Micro SD Cards 40, such Micro SD Cards will be well known to those skilled in the art. A card access opening 42 is formed in the rear wall 12 of the rear housing 8 to provide access to the card receiving slot 39 of the microcomputer device 25 through the card accommodating opening 38. A closure means, in this embodiment of the invention a closure plate 44 is provided for closing the card access opening 42. The closure plate 44 is pivotally coupled to the rear wall 12 of the rear housing 8 by a pivot pin 45 located just above the card access opening 42, and the closure plate 44 is pivotal about the pivot pin 45 between an open state illustrated in Fig. 4 and a closed state (not shown) closing the card access opening 42.

The Micro SD Card 40 acts as the hard drive for the microcomputer device 25 and configures the communicating mode and the communications protocol of the microcomputer device 25 for communicating with the desired remote computer (not shown) in a suitable communications protocol. Storage pockets 47 are located on the exterior surface of the rear wall 12 of the rear housing 8 for storing Micro SD Cards 40, which are adapted to configure the microcomputer device 25 to communicate in other communications protocols. It is also envisaged that other hard drive (boot) devices may be used in the USB3 port, for example NVMe hard drives for controlling the microcomputer device 25.

In use, with the minicomputer 1 configured from the computer monitor 3 connected to a mains AC electricity supply through the mains electricity port 21, and the keyboard 4 and the mouse 5 powered by respective batteries (not shown), the minicomputer 1 is ready for use. Depending on the remote computer with which the minicomputer 1 is to be configured to communicate, the appropriate Micro SD Card 40 is inserted in the card receiving slot 39 of the microcomputer device 25. The minicomputer 1 is then operated as a normal computer through the keyboard 4 and/or the mouse 5, with the microcomputer device 25 communicating commands from the keyboard 4 and the mouse 5 to the remote computer, and the microcomputer device 25 operating under the control of the remote computer, the keyboard 4 and the mouse 5 for controlling the display on the visual display screen 6 through the screen controller 18.

While the microcomputer device has been described as comprising a microcomputer device sold under the tradename Raspberry Pi, any other suitable microcomputer board having similar capabilities as the microcomputer device 25 may be used, for example, NanoPC-T4, Banana Pi R64, LattePanda Alpha 864, ODROID-XU4, Udoo x86 II, Ultra, ODROID-C1+, VoCore2, ASUS Tinker Board S, NVIDIA Jetson Nano Developer Kit, Onion Omega2+, ClockworkPi, Arduino Mega 2560, Rock64 Media Board, PocketBeagle, Le Potato, Banana Pi M64, Orange Pi Zero, VIM2 SBC by Khadas, NanoPi NEO2, Helios64 by Kobol and ODROID-HC2.

While a microcomputer device power supply has been provided separate from the screen power supply, in some embodiments of the invention depending on the output power available from the screen power supply unit 19, the microcomputer device may be powered directly from the screen power supply unit 19.

While the keyboard and the mouse have been described as being wireless enabled, it will be appreciated that the minicomputer may be operated with a keyboard and a mouse hardwired to the minicomputer.

## Claims

1. A method for configuring a computer monitor (2) as a minicomputer (1), the computer monitor (2) comprising a housing (8) defining a hollow interior region (9) and an open mouth (11) to the hollow interior region (9) closed by a visual display screen (6), a component tray (10) located within the hollow interior region (9), a screen controller (18) mounted on the component tray (10) with at least one port of the screen controller (18) accessible through a port access opening (22) originally formed in the housing (8) providing access to the at least one port of the screen controller (18), a power supply (19) mounted on the component tray (10) configured for producing a power supply to power the screen controller (18) and the screen (6) from a mains AC electricity power source, wherein the method comprises altering the position of the screen controller (18) on the component tray (10) to provide access to the port access opening (22) originally formed in the housing (8) providing access to the at least one port of the screen controller (18), mounting a microcomputer board (25) on the component tray (10) with at least one port (27) of the microcomputer board (25) being accessible through the port access opening (22) originally formed in the housing (8) that is now accessible due to moving of the screen controller (18), configuring the microcomputer board (25) to control the visual display screen (6) through the screen controller (18), to communicate wirelessly with at least one of a keyboard (4) and a mouse (5), and to communicate wirelessly with a remote computer, and the microcomputer board (25) comprises a Micro SD Card receiver (39) for receiving one of a plurality of Micro SD Cards (40).

2. A method as claimed in Claim 1 **characterised in that** the microcomputer board (25) comprises a local area network port (27a), two USB3 ports (27b) and two USB2 ports (27c), and the local area network port (27a), the two USB3 ports (27b) and the two USB2 ports (27c) of the microcomputer board (25) are accessible through the port access opening (22) now accessible due to moving of the screen controller (18).

3. A method as claimed in Claim 1 or 2 **characterised in that** the port access opening (22) in the housing (8) is provided along a lower end (16) of the housing (8).

4. A method as claimed in any preceding claim **characterised in that** the microcomputer board (25) is configured so that when the Micro SD Card (40) is located in the Micro SD Card receiver (39), the Micro SD Card (40) acts as a hard drive for the microcomputer board (25).

5. A method as claimed in any preceding claim **characterised in that** the communications mode of the microcomputer board (25) is configured by the Micro SD Card (40) located in the Micro SD Card receiver (39).

6. A method as claimed in any preceding claim **characterised in that** a Micro SD Card access opening (42) is formed in the housing (8) for accommodating a Micro SD Card (40) therethrough for insertion in the Micro SD Card receiver (39) of the microcomputer board (25).

7. A method as claimed in Claim 6 **characterised in that** the Micro SD Card access opening (42) is located in the rear of the housing (8).

8. A method as claimed in any preceding claim **characterised in that** the microcomputer board (25) is configured to communicate with the remote computer in any one or more of the following protocols: Digital Signage, VPN, OpenVPN, HDX (Citrix JPG H.264), Horizon (VMWare BLAST PCoIP ), Media Player, NX (NoMachine), Performance Monitor, RDP (Microsoft RDP RemoteFX), SPICE, SSH, TN3270 (IBM), Telnet, User Defined(Bespoke), VNC, Web, X11 and IOT (Internet of Things).

9. A method as claimed in any preceding claim **characterised in that** the remote computer with which the microcomputer board (25) is configured to communicate comprises one or more of a remote main frame computer, a remote computer server, a remote desktop computer, a cloud computer and any other remote computing means.

10. A method as claimed in any preceding claim **characterised in that** a microcomputer board power supply (35) is located on the component tray (10) for providing a power supply to the microcomputer board (25) from the mains AC electricity supply source.

11. A method as claimed in any preceding claim **characterised in that** the microcomputer board (25) comprises a microcomputer board sold under any of the following trade names: Raspberry Pi, NanoPC-T4, Banana Pi R64, LattePanda Alpha 864, ODROID-XU4, Udoo x86 II, Ultra, ODROID-C1+, VoCore2, ASUS Tinker Board S, NVIDIA Jetson Nano Developer Kit, Onion Omega2+, ClockworkPi, Arduino Mega 2560, Rock64 Media Board, PocketBeagle, Le Potato, Banana Pi M64, Orange Pi Zero, VIM2 SBC by Khadas, NanoPi NEO2, Helios64 by Kobol and ODROID-HC2.

12. A minicomputer converted from a computer monitor (2) by the method as claimed in any preceding claim, the minicomputer comprising a computer monitor (2) comprising a housing (8) defining a hollow interior region (9) and an open mouth (11) to the hollow interior region (9) closed by a visual display screen (6), a component tray (10) located within the hollow interior region (9), a screen controller (18) and a power supply (19) mounted on the component tray (10), the power supply (19) being configured for producing a power supply to power the screen controller (18) and the screen (6) from a mains AC electricity power source, wherein the position of the screen controller (18) on the component tray (10) has been altered to provide access to a port access opening (22) originally formed in the housing (8) providing access to at least one port of the screen controller (18), a microcomputer board (25) is mounted on the component tray (10) with at least one port (27) of the microcomputer board (25) accessible through the port access opening (22) originally formed in the housing (8) that is now accessible due to moving of the screen controller (18), the microcomputer board (25) is configured to control the visual display screen (6) through the screen controller (18), to communicate wirelessly with at least one of a keyboard (4) and a mouse (5), and to communicate wirelessly with a remote computer, and comprises a Micro SD Card receiver (39) for receiving one of a plurality of Micro SD Cards (40).

13. A minicomputer as claimed in Claim 12 **characterised in that** the microcomputer board (25) is configured so that when the Micro SD Card (40) is located in the Micro SD Card receiver (39), the Micro SD Card (40) acts as a hard drive for the microcomputer board (25).

14. A minicomputer as claimed in Claim 12 or 13 **characterised in that** the microcomputer board (25) comprises a microcomputer board sold under any of the following trade names: Raspberry Pi, NanoPC-T4, Banana Pi R64, LattePanda Alpha 864, ODROID-XU4, Udoo x86 II, Ultra, ODROID-C1+, VoCore2, ASUS Tinker Board S, NVIDIA Jetson Nano Developer Kit, Onion Omega2+, ClockworkPi, Arduino Mega 2560, Rock64 Media Board, PocketBeagle, Le Potato, Banana Pi M64, Orange Pi Zero, VIM2 SBC by Khadas, NanoPi NEO2, Helios64 by Kobol and ODROID-HC2.

## Patentansprüche

1. Verfahren zur Konfiguration eines Computermonitors (2) als ein Minicomputer (1), wobei der Computermonitor (2) ein Gehäuse (8), das einen hohlen Innenbereich (9) und einen offenen Zugang (11) zu dem hohlen Innenbereich (9) definiert, der durch einen visuellen Anzeigebildschirm (6) verschlossen ist, einen Komponententräger (10), der sich innerhalb des hohlen Innenbereichs (9) befindet, eine Bildschirmsteuerung (18), die an dem Komponententräger (10) montiert ist, wobei mindestens ein Anschluss der Bildschirmsteuerung (18) durch eine Anschlusszugangsöffnung (22) zugänglich ist, die ursprünglich in dem Gehäuse (8) ausgebildet war und Zugang zu dem mindestens einen Anschluss der Bildschirmsteuerung (18) gewährt, und eine Stromversorgung (19) umfasst, die an dem Komponententräger (10) montiert ist und dazu konfiguriert ist, eine Stromversorgung zum Betreiben der Bildschirmsteuerung (18) und des Bildschirms (6) aus einer Wechselstromnetz-Versorgungsquelle zu erzeugen, wobei das Verfahren ein Ändern der Position der Bildschirmsteuerung (18) auf dem Komponententräger (10), um Zugang zu der Anschlusszugangsöffnung (22) bereitzustellen, die ursprünglich in dem Gehäuse (8) ausgebildet war und Zugang zu dem mindestens einen Anschluss der Bildschirmsteuerung (18) gewährt, ein Montieren einer Mikrocomputerplatine (25) an dem Komponententräger (10), wobei mindestens ein Anschluss (27) der Mikrocomputerplatine (25) durch die Anschlusszugangsöffnung (22) zugänglich ist, die ursprünglich in dem Gehäuse (8) ausgebildet war und nun aufgrund einer Bewegung der Bildschirmsteuerung (18) zugänglich ist, und ein Konfigurieren der Mikrocomputerplatine (25) umfasst, um den visuellen Anzeigebildschirm (6) durch die Bildschirmsteuerung (18) zu steuern, um drahtlos mit mindestens einer von einer Tastatur (4) und einer Maus (5) zu kommunizieren, und um drahtlos mit einem Fern-Computer zu kommunizieren, und wobei die Mikrocomputerplatine (25) einen Micro-SD-Kartenempfänger (39) zur Aufnahme einer von einer Mehrzahl von Micro-SD-Karten (40) umfasst.

2. Verfahren nach Anspruch 1, **dadurch gekennzeichnet, dass** die Mikrocomputerplatine (25) einen lokalen Netzwerkanschluss (27a), zwei USB3-Anschlüsse (27b) und zwei USB2-Anschlüsse (27c) umfasst, und der lokale Netzwerkanschluss (27a), die zwei USB3-Anschlüsse (27b) und die zwei USB2-Anschlüsse (27c) der Mikrocomputerplatine (25) durch die Anschlusszugangsöffnung (22) zugänglich sind, die nun aufgrund der Bewegung der Bildschirmsteuerung (18) zugänglich ist.

3. Verfahren nach Anspruch 1 oder 2, **dadurch gekennzeichnet, dass** die Anschlusszugangsöffnung (22) in dem Gehäuse (8) entlang eines unteren Endes (16) des Gehäuses (8) vorgesehen ist.

4. Verfahren nach einem der vorhergehenden Ansprüche, **dadurch gekennzeichnet, dass** die Mikrocomputerplatine (25) so konfiguriert ist, dass, wenn sich die Micro-SD-Karte (40) in dem Micro-SD-Kartenempfänger (39) befindet, die Micro-SD-Karte (40) als eine Festplatte für die Mikrocomputerplatine (25) fungiert.

5. Verfahren nach einem der vorhergehenden Ansprüche, **dadurch gekennzeichnet, dass** der Kommunikationsmodus der Mikrocomputerplatine (25) durch die Micro-SD-Karte (40) konfiguriert ist, die sich in dem Micro-SD-Kartenempfänger (39) befindet.

6. Verfahren nach einem der vorhergehenden Ansprüche, **dadurch gekennzeichnet, dass** eine Micro-SD-Kartenzugangsöffnung (42) in dem Gehäuse (8) ausgebildet ist, um eine Micro-SD-Karte (40) dort hindurch zur Einführung in den Micro-SD-Kartenempfänger (39) der Mikrocomputerplatine (25) aufzunehmen.

7. Verfahren nach Anspruch 6, **dadurch gekennzeichnet, dass** sich die Micro-SD-Kartenzugangsöffnung (42) auf der Rückseite des Gehäuses (8) befindet.

8. Verfahren nach einem der vorhergehenden Ansprüche, **dadurch gekennzeichnet, dass** die Mikrocomputerplatine (25) konfiguriert ist, um mit dem Fern-Computer in einem oder mehreren der folgenden Protokolle zu kommunizieren: Digital Signage, VPN, OpenVPN, HDX (Citrix JPG H.264), Horizon (VMWare BLAST PCoIP), Media Player, NX (NoMachine), Performance Monitor, RDP (Microsoft RDP RemoteFX), SPICE, SSH, TN3270 (IBM), Telnet, benutzerdefiniert (maßgeschneidert), VNC, Web, X11 und IOT (Internet der Dinge).

9. Verfahren nach einem der vorhergehenden Ansprüche, **dadurch gekennzeichnet, dass** der Fern-Computer, mit dem zu kommunizieren die Mikrocomputerplatine (25) konfiguriert ist, einen oder mehrere von Folgendem umfasst: einen Fern-Großrechner, einen Fern-Computerserver, einen Fern-Desktop-Computer, einen Cloud-Computer und ein beliebiges anderes Fern-Rechenmittel.

10. Verfahren nach einem der vorhergehenden Ansprüche, **dadurch gekennzeichnet, dass** sich eine Mikrocomputerplatinen-Stromversorgung (35) auf dem Komponententräger (10) befindet, um eine Stromversorgung für die Mikrocomputerplatine (25) aus der Wechselstromnetz-Versorgungsquelle bereitzustellen.

11. Verfahren nach einem der vorhergehenden Ansprüche, **dadurch gekennzeichnet, dass** die Mikrocomputerplatine (25) eine Mikrocomputerplatine umfasst, die unter einem der folgenden Handelsnamen vertrieben wird: Raspberry Pi, NanoPC-T4, Banana Pi R64, LattePanda Alpha 864, ODROID-XU4, Udoo x86 II, Ultra, ODROID-C1+, VoCore2, ASUS Tinker Board S, NVIDIA Jetson Nano Developer Kit, Onion Omega2+, ClockworkPi, Arduino Mega 2560, Rock64 Media Board, PocketBeagle, Le Potato, Banana Pi M64, Orange Pi Zero, VIM2 SBC von Khadas, NanoPi NEO2, Helios64 von Kobol und ODROID-HC2.

12. Minicomputer, der durch das Verfahren nach einem der vorhergehenden Ansprüche aus einem Computermonitor (2) konvertiert wurde, wobei der Minicomputer einen Computermonitor (2) umfasst, der ein Gehäuse (8), das einen hohlen Innenbereich (9) und einen offenen Zugang (11) zu dem hohlen Innenbereich (9) definiert, der durch einen visuellen Anzeigebildschirm (6) verschlossen ist, einen Komponententräger (10), der sich innerhalb des hohlen Innenbereichs (9) befindet, eine Bildschirmsteuerung (18) und eine Stromversorgung (19) umfasst, die an dem Komponententräger (10) montiert sind, wobei die Stromversorgung (19) dazu konfiguriert ist, eine Stromversorgung zum Betreiben der Bildschirmsteuerung (18) und des Bildschirms (6) aus einer Wechselstromnetz-Versorgungsquelle zu erzeugen, wobei die Position der Bildschirmsteuerung (18) auf dem Komponententräger (10) geändert wurde, um Zugang zu einer Anschlusszugangsöffnung (22) bereitzustellen, die ursprünglich in dem Gehäuse (8) ausgebildet war und Zugang zu mindestens einem Anschluss der Bildschirmsteuerung (18) gewährt, und wobei eine Mikrocomputerplatine (25) an dem Komponententräger (10) montiert ist, wobei mindestens ein Anschluss (27) der Mikrocomputerplatine (25) durch die Anschlusszugangsöffnung (22) zugänglich ist, die ursprünglich in dem Gehäuse (8) ausgebildet war und nun aufgrund einer Bewegung der Bildschirmsteuerung (18) zugänglich ist, die Mikrocomputerplatine (25) konfiguriert ist, um den visuellen Anzeigebildschirm (6) durch die Bildschirmsteuerung (18) zu steuern, um drahtlos mit mindestens einer von einer Tastatur (4) und einer Maus (5) zu kommunizieren, und um drahtlos mit einem Fern-Computer zu kommunizieren, und einen Micro-SD-Kartenempfänger (39) zur Aufnahme einer von einer Mehrzahl von Micro-SD-Karten (40) umfasst.

13. Minicomputer nach Anspruch 12, **dadurch gekennzeichnet, dass** die Mikrocomputerplatine (25) so konfiguriert ist, dass, wenn sich die Micro-SD-Karte (40) in dem Micro-SD-Kartenempfänger (39) befindet, die Micro-SD-Karte (40) als eine Festplatte für die Mikrocomputerplatine (25) fungiert.

14. Minicomputer nach Anspruch 12 oder 13, **dadurch gekennzeichnet, dass** die Mikrocomputerplatine (25) eine Mikrocomputerplatine umfasst, die unter einem der folgenden Handelsnamen vertrieben wird: Raspberry Pi, NanoPC-T4, Banana Pi R64, LattePanda Alpha 864, ODROID-XU4, Udoo x86 II, Ultra, ODROID-C1+, VoCore2, ASUS Tinker Board S, NVIDIA Jetson Nano Developer Kit, Onion Omega2+, ClockworkPi, Arduino Mega 2560, Rock64 Media Board, PocketBeagle, Le Potato, Banana Pi M64, Orange Pi Zero, VIM2 SBC von Khadas, NanoPi NEO2, Helios64 von Kobol und ODROID-HC2.

## Revendications

1. Procédé de configuration d'un écran d'ordinateur (2) en tant que mini-ordinateur (1), l'écran d'ordinateur (2) comprenant un boîtier (8) définissant une région intérieure creuse (9) et une ouverture (11) vers la région intérieure creuse (9) fermée par un écran d'affichage visuel (6), un plateau de composants (10) situé à l'intérieur de la région intérieure creuse (9), un contrôleur d'écran (18) monté sur le plateau de composants (10), au moins un port du contrôleur d'écran (18) étant accessible par une ouverture d'accès aux ports (22) formée à l'origine dans le boîtier (8) et permettant d'accéder à ce au moins un port du contrôleur d'écran (18), une alimentation électrique (19) montée sur le plateau de composants (10) et configurée pour produire une alimentation électrique destinée à alimenter le contrôleur d'écran (18) et l'écran (6) à partir d'une source d'alimentation électrique CA du secteur, dans lequel le procédé comprend la modification de la position du contrôleur d'écran (18) sur le plateau de composants (10) afin de permettre l'accès à l'ouverture d'accès aux ports (22) formée à l'origine dans le boîtier (8) et permettant d'accéder à au moins un port du contrôleur d'écran (18), le montage d'une carte micro-ordinateur (25) sur le plateau de composants (10), au moins un port (27) de la carte micro-ordinateur (25) étant accessible par l'ouverture d'accès aux ports (22) formée à l'origine dans le boîtier (8) et désormais accessible grâce au déplacement du contrôleur d'écran (18), la configuration de la carte micro-ordinateur (25) pour commander l'écran d'affichage visuel (6) par l'intermédiaire du contrôleur d'écran (18), pour communiquer sans fil avec au moins l'un d'un clavier (4) et d'une souris (5), et pour communiquer sans fil avec un ordinateur distant, et la carte micro-ordinateur (25) comprend un récepteur de carte Micro SD (39) destiné à recevoir l'une d'une pluralité de cartes Micro SD (40).

2. Procédé selon la revendication 1, **caractérisé en ce que** la carte micro-ordinateur (25) comprend un port de réseau local (27a), deux ports USB 3 (27b) et deux ports USB 2 (27c), et le port de réseau local (27a), les deux ports USB 3 (27b) et les deux ports USB 2 (27c) de la carte micro-ordinateur (25) sont accessibles par l'ouverture d'accès aux ports (22) désormais accessible grâce au déplacement du contrôleur d'écran (18).

3. Procédé selon la revendication 1 ou 2, **caractérisé en ce que** l'ouverture d'accès aux ports (22) dans le boîtier (8) est prévue le long d'une extrémité inférieure (16) du boîtier (8).

4. Procédé selon l'une quelconque des revendications précédentes, **caractérisé en ce que** la carte micro-ordinateur (25) est configurée de telle sorte que, lorsque la carte Micro SD (40) est placée dans le récepteur de carte Micro SD (39), la carte Micro SD (40) fait office de disque dur pour la carte micro-ordinateur (25).

5. Procédé selon l'une quelconque des revendications précédentes, **caractérisé en ce que** le mode de communication de la carte micro-ordinateur (25) est configuré par la carte Micro SD (40) située dans le récepteur de carte Micro SD (39).

6. Procédé selon l'une quelconque des revendications précédentes, **caractérisé en ce qu'**une ouverture d'accès à la carte Micro SD (42) est formée dans le boîtier (8) pour permettre le passage à travers celle-ci d'une carte Micro SD (40) en vue de son insertion dans le récepteur de carte Micro SD (39) de la carte micro-ordinateur (25).

7. Procédé selon la revendication 6, **caractérisé en ce que** l'ouverture d'accès à la carte Micro SD (42) est située à l'arrière du boîtier (8).

8. Procédé selon l'une quelconque des revendications précédentes, **caractérisé en ce que** la carte micro-ordinateur (25) est configurée pour communiquer avec l'ordinateur distant selon l'un ou plusieurs des protocoles suivants : Digital Signage, VPN, OpenVPN, HDX (Citrix JPG H.264), Horizon (VMWare BLAST PCoIP), Media Player, NX (NoMachine), Performance Monitor, RDP (Microsoft RDP RemoteFX), SPICE, SSH, TN3270 (IBM), Telnet, User Defined (Bespoke), VNC, Web, X11 et IoT (Internet des objets).

9. Procédé selon l'une quelconque des revendications précédentes, **caractérisé en ce que** l'ordinateur distant avec lequel la carte micro-ordinateur (25) est configurée pour communiquer comprend un ou plusieurs des éléments suivants : un ordinateur central distant, un serveur informatique distant, un ordinateur de bureau distant, un ordinateur en nuage et tout autre moyen informatique distant.

10. Procédé selon l'une quelconque des revendications précédentes, **caractérisé en ce qu'**une alimentation électrique de carte micro-ordinateur (35) est située sur le plateau de composants (10) pour fournir une alimentation électrique à la carte micro-ordinateur (25) à partir de la source d'alimentation électrique CA du secteur.

11. Procédé selon l'une quelconque des revendications précédentes, **caractérisé en ce que** la carte micro-ordinateur (25) comprend une carte micro-ordinateur commercialisée sous l'un quelconque des noms commerciaux suivants : Raspberry Pi, NanoPC-T4, Banana Pi R64, LattePanda Alpha 864, ODROID-XU4, Udoo x86 II, Ultra, ODROID-C1+, VoCore2, ASUS Tinker Board S, NVIDIA Jetson Nano Developer Kit, Onion Omega2+, ClockworkPi, Arduino Mega 2560, Rock64 Media Board, PocketBeagle, Le Potato, Banana Pi M64, Orange Pi Zero, VIM2 SBC de Khadas, NanoPi NEO2, Helios64 de Kobol et ODROID-HC2.

12. Un mini-ordinateur obtenu à partir d'un écran d'ordinateur (2) selon le procédé revendiqué dans l'une quelconque des revendications précédentes, le mini-ordinateur comprenant un écran d'ordinateur (2) comprenant un boîtier (8) définissant une région intérieure creuse (9) et une ouverture (11) vers la région intérieure creuse (9) fermée par un écran d'affichage visuel (6), un plateau de composants (10) situé à l'intérieur de la région intérieure creuse (9), un contrôleur d'écran (18) et une alimentation électrique (19) montés sur le plateau de composants (10), l'alimentation électrique (19) étant configurée pour fournir une alimentation électrique afin d'alimenter le contrôleur d'écran (18) et l'écran (6) à partir d'une source d'alimentation électrique CA du secteur, dans lequel la position du contrôleur d'écran (18) sur le plateau de composants (10) a été modifiée pour permettre l'accès à une ouverture d'accès aux ports (22) formée à l'origine dans le boîtier (8) et donnant accès à au moins un port du contrôleur d'écran (18), une carte micro-ordinateur (25) est montée sur le plateau de composants (10), au moins un port (27) de la carte micro-ordinateur (25) étant accessible par l'ouverture d'accès aux ports (22) formée à l'origine dans le boîtier (8) et désormais accessible grâce au déplacement du contrôleur d'écran (18), la carte micro-ordinateur (25) est configurée pour commander l'écran d'affichage visuel (6) par l'intermédiaire du contrôleur d'écran (18), pour communiquer sans fil avec au moins l'un d'un clavier (4) et d'une souris (5), et pour communiquer sans fil avec un ordinateur distant, et comprend un récepteur de carte Micro SD (39) destiné à recevoir l'une d'une pluralité de cartes Micro SD (40).

13. Mini-ordinateur selon la revendication 12, **caractérisé en ce que** la carte micro-ordinateur (25) est configurée de telle sorte que, lorsque la carte Micro SD (40) est insérée dans le récepteur de carte Micro SD (39), la carte Micro SD (40) fait office de disque dur pour la carte micro-ordinateur (25).

14. Mini-ordinateur selon la revendication 12 ou 13, **caractérisé en ce que** la carte micro-ordinateur (25) comprend une carte micro-ordinateur commercialisée sous l'un quelconque des noms commerciaux suivants : Raspberry Pi, NanoPC-T4, Banana Pi R64, LattePanda Alpha 864, ODROID-XU4, Udoo x86 II, Ultra, ODROID-C1+, VoCore2, ASUS Tinker Board S, NVIDIA Jetson Nano Developer Kit, Onion Omega2+, ClockworkPi, Arduino Mega 2560, Rock64 Media Board, PocketBeagle, Le Potato, Banana Pi M64, Orange Pi Zero, VIM2 SBC de Khadas, NanoPi NEO2, Helios64 de Kobol et ODROID-HC2.
